# EUROPÄISCHE PATENTSCHRIFT

(11) **EP 2 885 566 B1**
(45) Veröffentlichungstag und Bekanntmachung des Hinweises auf die Patenterteilung: **10.10.2018**
(21) Anmeldenummer: 13753145.5
(22) Anmeldetag: 19.08.2013
(51) Int. Cl.: F16L 37/086, F16L 37/34

(54) **AUFNAHME FÜR EINEN VORRATSBEHÄLTER, ANORDNUNG SOLCHER AUFNAHMEN, FAHRZEUGBEHANDLUNGSANLAGE UND VORRATSBEHÄLTER**
HOLDER FOR A STORAGE CONTAINER, ARRANGEMENT OF SUCH HOLDERS, VEHICLE TREATMENT PLANT, AND STORAGE CONTAINER
LOGEMENT POUR RÉSERVOIR, AGENCEMENT FORMÉ DE TELS LOGEMENTS, INSTALLATION DE TRAITEMENT POUR VÉHICULE ET RÉSERVOIR

(30) Priorität: 20.08.2012 DE 102012107628
(43) Veröffentlichungstag der Anmeldung: 24.06.2015
(73) Patentinhaber: WashTec Holding GmbH, 86153 Augsburg (DE)
(72) Erfinder: KISER, Franz, 86510 Ried (DE)
(74) Vertreter: Rabe, Andreas
(86) Internationale Anmeldenummer: PCT/EP2013/067229
(87) Internationale Veröffentlichungsnummer: WO 2014/029730

(56) Entgegenhaltungen:
- US-A- 6 158 486
- US-A1- 2002 093 194
- US-A1- 2007 187 433
- US-B1- 6 382 593

## Beschreibung

Die Erfindung betrifft eine Aufnahme für einen Vorratsbehälter für Zusatzstoffe in Fahrzeugbehandlungsanlagen zum selbsttätigen Halten des Vorratsbehälters nach dem Einsetzen des Vorratsbehälters in die Aufnahme, eine Anordnung solcher Aufnahmen, eine Fahrzeugbehandlungsanlage sowie eine Aufnahme mit einem Vorratsbehälter.

Bei bekannten Fahrzeugbehandlungsanlagen, insbesondere Fahrzeugwaschanlagen, werden auf die Fahrzeuge unterschiedliche Behandlungsflüssigkeiten aufgebracht. Beispielsweise werden zu Beginn des Reinigungsvorgangs Schmutzlöser aufgebracht, welche den auf dem Fahrzeug befindlichen Schmutz anlösen und aufweichen. Anschließend wir der Schmutzlöser abgespült oder mittels Hochdruckwasserstrahl entfernt. Das eigentliche Waschschampoo wird anschließend während der nachfolgenden Bürstenwäsche aufgesprüht und danach nochmals mit klarem Wasser oder ggf. auch enthärtetem Wasser nachgespült. Abhängig vom gewünschten Waschprogramm kann dann ggf. noch ein Wachs aufgebracht werden. Üblicherweise werden diese Behandlungsflüssigkeiten dadurch bereitgestellt, dass in ein Grundmedium, in der Regel Wasser, hochdosierte Zusatzmitteln, wie z.B. Waschshampoos, Schaumbildner, Wachse, Trocknungshilfsmittel, Seifen, Felgenreiniger, Insektenentferner, etc. eindosiert werden. Diese in der Regel flüssigen oder viskosen Zusatzmittel sind üblicherweise in Vorratsbehälter abgefüllt, welche in Aufnahmen einer Dosiervorrichtung der Fahrzeugwaschanlage angeordnet und mit Dosierpumpen in das Grundmedium dosierbar sind.

Eine solchen Vorratsbehälter offenbart die DE 10 2007 017 615 A1 in Form einer Kartusche zum Einsetzen in eine Aufnahmevorrichtung einer Fahrzeugbehandlungseinrichtung. Bei solchen Aufnahmen besteht der Nachteil, dass die Kartuschen oft umständlich auszutauschen und schwierig zu handhaben sind.

Die US 6 158 486 A offenbart eine Aufnahme für einen Vorratsbehälter mit einer am Einlass der Aufnahme angeordneten Kupplung. Eine daran durch Lippen gebildete lösbare Schnapp Verbindung hält den Behälter gegen eine Feder in der Aufnahme. Hierdurch wird verhindert, dass der Behälter innerhalb eines durch die Schnapp Verbindung vorgegebenen Kräftebereichs aus der Aufnahme herausgedrückt wird. Bei Überschreiten des Kräftebereichs
kann der Vorratsbehälter jedoch ohne weiteres aus der Aufnahme herausgezogen werden, eine sichere Verriegelung der Kupplung zwischen Aufnahme und Behälter findet nicht statt.

Die US 2002/093 194 A1 offenbart eine Schnellkupplung zur Verbindung zweier Rohre mit einer Verriegelungsvorrichtung, die über einen Druckknopf eine Verriegelung der Schnellkupplung erlaubt.

Die US 6 382 593 B1 offenbart eine Flüssigkeitskupplung zur Abgabe von Flüssigkeiten, die für den Anschluss innerhalb einer Flüssigkeitsquelle angeordneten Inlets mit einem Flüssigkeitsaufnahmeelement vorgesehen ist. Die Flüssigkeitskupplung umfasst ein Gehäuse, das einen zentralen Durchgang zwischen den vorderen und hinteren Öffnungen und einem ersten Strömungsdurchgang zwischen der Rückseite und ein Seitenöffnungen definiert. Dabei ist ein Hebelantrieb drehbar auf dem Gehäuse montiert, um den ersten Strömungsdurchgang zu Öffnen oder zu Schließen.

Die US 2007/187 433 A1 offenbart einen Dosier- und Abgabeverschluss für einen Behälter, bei dem sich zwei drehbare Scheiben in Verbindung mit einem feststehenden Kappenelement drehen, um eine genaue Messung und Abgabe eines pulverförmigen Materials zu ermöglichen.

Die DE 199 08 181 A1 offenbart einen in eine Aufnahme einsetzbaren Behälter mit einem Auslass, welcher mit einer Kupplung der Aufnahme verbunden wird. Über eine Schnapp Verbindung kann der Behälter in der Aufnahme gehalten werden. Auch dort kann der Behälter leicht bei Aufwenden einer vorgegebenen Kraft aus der Aufnahme herausgezogen werden. Auch dort kann keine sichere Verbindung des Auslasses des Behälters mit der Kupplung der Aufnahme sichergestellt werden, ein Herausziehen ist bei Aufbringen der dafür notwendigen Kraft ohne weiteres möglich.

Aufgabe der Erfindung ist es deshalb, ein einfaches und schnelles Wechseln des Vorratsbehälters zu ermöglichen. Zudem soll die Aufnahme platzsparend aufgebaut sein und auch im Verbund mit mehreren, nebeneinander angeordneten baugleichen Aufnahmen ein einfaches und schnelles Wechseln des Vorratsbehälters gewährleisten.

Diese Aufgabe wird durch eine Aufnahme mit den Merkmalen des Anspruchs 1, eine Anordnung solcher Aufnahmen mit den Merkmalen des Anspruchs 9, eine Fahrzeugbehandlungsanlage mit den Merkmalen des Anspruchs 11 sowie eine Aufnahme mit einem Vorratsbehälter mit den Merkmalen des Anspruchs 12 gelöst. Vorteilhafte Ausgestaltungen der Erfindung sind in den Unteransprüchen angegeben.

Die erfindungsgemäße Aufnahme für einen Vorratsbehälter umfasst einen Einlass zur Weiterleitung von in dem Vorratsbehälter eingebrachten Zusatzstoffen an eine Dosiervorrichtung und eine an dem Einlass angeordnete Kupplung zum lösbaren Verriegeln mit einem an einem Auslass des Behälters angeordneten Kupplungsgegenstück und einem an der Aufnahme angeordneten Betätigungselement zur Betätigung der Kupplung. Die Kupplung mit dem Betätigungselement ermöglicht ein schnelles und einfaches Wechseln der Vorratsbehälter. Bevorzugt kann die Kupplung, wie beispielsweise bei einer Schnappkupplung vorgesehen, federbewirkt in einer geschlossenen, verriegelten Stellung gehalten werden, wodurch das Betätigungselement nur zum Öffnen bzw. Entriegeln der Kupplung gebraucht wird. Nach dem Einsetzen des Vorratsbehälters wird dieser durch diese Kupplung selbsttätig sicher in der Aufnahme gehalten und kann nicht versehentlich herausgenommen werden.

Bei der erfindungsgemäßen Aufnahme ist in der Kupplung ein Ventilelement vorgesehen, das im ungekuppelten Zustand geschlossen ist. Dies ermöglicht einen leckagefreien Wechsel und eine einfache Lagerung der Vorratsbehälter.

Ferner ist das Betätigungselement längs der Einschubrichtung des Vorratsbehälters in der Aufnahme angeordnet, so dass bei der erfindungsgemäßen Anordnung von mindestens zwei Aufnahmen unmittelbar nebeneinander und/oder übereinander das Betätigungselement mindestens einer oder aller der Aufnahmen von der Stirnseite der oder aller Aufnahme betätigbar ist.

In einer besonders vorteilhaften Ausführungsform kann das Betätigungselement an einem ersten Ende an eine vordere Stirnseite der Aufnahme geführt sein und an einem zweiten Ende eine Betätigungsvorrichtung zur Betätigung der Kupplung aufweisen. Hierdurch wird eine einfache Zugänglichkeit zu der Betätigungsvorrichtung und damit ein einfaches Lösen der Kupplungsverbindung ermöglicht. Bevorzugt kann hierbei das Betätigungselement in die Aufnahme fast vollständig integriert sein.

Das Betätigungselement kann dabei besonders vorteilhaft als Schubstange ausgeführt sein, welche eine als Nocken ausgebildete Betätigungsvorrichtung zur Betätigung der Kupplung aufweist. Dies ist insbesondere bei einer Schnappkupplung von Vorteil, die federbewirkt in ihrer verriegelten Stellung gehalten wird. Durch die Nocke kann unter Ausnützung günstiger Hebelkräfte eine einfache Betätigung der Kupplung erreicht werden. Die Schubstange kann zudem vollständig in die Aufnahme integriert sein, so dass diese nicht über die Aufnahme hervorsteht und das Verletzungsrisiko reduziert sowie eine Beschädigung der Schubstange vermieden werden können. Zum Betätigen der Kupplung kann die Schubstange in ihrer Längsrichtung aus der Aufnahme herausgezogen und dabei an der Kontaktfläche des Schieberelements gleitend vorbeigezogen werden. Hierdurch wird das Schieberelement in seine geöffnete Stellung bewegt und der Vorratsbehälter kann einfach aus der Aufnahme herausgenommen werden.

Ebenso vorteilhaft kann das Betätigungselement auch als Drehstab ausgeführt sein und eine als Hebel ausgebildete Betätigungsvorrichtung aufweisen, der die Kupplung zumindest in die geöffnete Stellung bewegt. Dies ist insbesondere bei einer Schnappkupplung von Vorteil, die federbewirkt in ihrer verriegelten Stellung gehalten wird. Die Verwendung eines Drehstabs ermöglicht einen äußerst platzsparenden Aufbau der Betätigungsvorrichtung, wobei über den Hebel dennoch ausreichend Kraft zur Betätigung der Kupplung übertragen werden kann. Eine Drehbewegung zur Betätigung der Kupplung ist besonders günstig, da dies im Vergleich zu einer Linearbewegung weniger Platz in Anspruch nimmt und geringere Reibungen auftreten.

Vorteilhaft kann die Kupplung ein zum formschlüssigen Eingriff in eine ringförmige Nut an dem Kupplungsgegenstück des Behälters ausgebildetes Schieberelement aufweisen, wobei das Schieberelement dann über die Betätigungsvorrichtung zwischen zum Öffnen und/oder Verriegeln der Kupplung betätigbar ist. Hierzu kann das Schieberelement vorteilhaft eine Kontaktfläche für die Betätigungsvorrichtung aufweisen, wobei diese vorteilhaft zur gleitenden Anlage an der Kontaktfläche ausgebildet ist.

Bei einer Drehung eines als Drehstabs ausgebildeten Betätigungselements wird der Hebel dann gegen das Schieberelement gedrückt, worauf dieses aus der ringförmigen Nut bewegt und die Kupplung gelöst wird. Bei der Verwendung einer Schubstange als Betätigungselement drückt diese bei einer Längsbewegung mit dem Nocken gegen das Schieberelement und löst hierdurch die Kupplung. Hierdurch ergibt sich eine einfach Konstruktion, welche die Betätigung der Kupplung auch über größere Entfernungen, insbesondere von der Stirnseite der Aufnahme aus ermöglicht.

Besonders günstig kann es sein, wenn der Hebel oder der Nocke an einer Kontaktfläche eines Schieberelements der Kupplung gleitend anliegt. Dies ermöglicht eine einfache und verschleiß arme Kraftübertragung. Zudem können auch Fertigungstoleranzen ausgeglichen werden. Bei einer Drehung des Drehstabs wird folglich das Schieberelement von einer Haltestellung in eine Lösestellung verschoben.

In einer vorteilhaften Weiterbildung kann der Hebel auch drehgelenkig an der Kupplung angeordnet sein, so dass die Kupplung über die Drehung des Drehstabs zwischen der geöffneten und der verriegelten Stellung hin und her bewegt werden kann. Eine Feder, welche z.B. eine Schnappkupplung in der verriegelten Stellung hält, ist dann nicht notwendig. Eine Schnappkupplung weist demgegenüber jedoch den Vorteil auf, dass der Vorratsbehälter jedoch sicher in der Aufnahme gehalten wird und der Benutzer das Verriegeln nicht vergessen kann.

Des Weiteren kann es günstig sein, den Drehstab und den Hebel vollständig in die Aufnahme zu integrieren. Die Gefahr, den Drehstab oder den Hebel zu beschädigen wird so vermieden und es ergibt sich ein äußerst kompakter Aufbau der Aufnahme. Zudem wird hierdurch auch das Verletzungsrisiko reduziert.

Die Aufnahme und der Drehstab können zudem in vorteilhafter Weise Positioniermittel zur Festlegung der Position des Drehstabs in seiner Längsrichtung bezüglich der Aufnahme aufweisen, damit der Hebel des Drehstabs immer in der zur Betätigung der Kupplung vorgesehenen Stellung gehalten wird, dabei aber drehbar bleibt. Solche Positioniermittel können z.B. eine Nut am Drehstab und eine in diese Nut eingreifende Erhöhung oder Clipsverbindung sein, welche den Drehstab an der Aufnahme hält.

Vorteilhaft kann es auch sein, an der Aufnahme einen Belüftungsstempel für ein am Vorratsbehälter vorgesehenes Belüftungsventil anzuordnen. Bei einer Verbindung der Aufnahme mit dem Vorratsbehälter mittels der Kupplung wird somit gleichzeitig das Belüftungsventil betätigt, was den Einbau des Vorratsbehälters wiederum stark vereinfacht.

Es wird außerdem eine Anordnung von mindestens zwei Aufnahmen der beschriebenen Art beansprucht. Die Aufnahmen können dabei übereinander oder nebeneinander angeordnet sein, wobei der Drehstab oder die Schubstange an eine vordere Stirnseite der Aufnahme geführt ist. Hierdurch wird eine einfache und schnelle Betätigung der Kupplung über den Drehstab oder die Schubstange gewährleistet.

Eine Fahrzeugbehandlungsanlage weist erfindungsgemäß mindestens eine vorstehend und nachfolgend beschriebene Aufnahme bzw. Anordnung auf. Bevorzugt handelt es sich bei der Fahrzeugbehandlungsanlage um eine Fahrzeugreinigungsanlage zum Waschen von Fahrzeugen mit Waschbürsten und/oder Hochdruck, zum Aufbringen von Wachs und/oder Polieren der Fahrzeugoberflächen. Die Fahrzeugbehandlungsanlage kann vorteilhaft als Portalanlage, Durchfahranlage oder als Anlage mit Zwangsförderung der Fahrzeuge ausgestattet sein.

Ferner betrifft die Erfindung eine Aufnahme mit einem Vorratsbehälter für Zusatzstoffe einer Fahrzeugbehandlungsanlage. Sie weist einen Auslass für die Zusatzstoffe und ein Kupplungsgegenstück auf, das mit einer an einem Einlass der Aufnahme einer Dosiervorrichtung der Fahrzeugbehandlungsanlage vorgesehenen Kupplung lösbar gekuppelt ist. Die Aufnahme ist wie oben und
nachfolgend beschrieben ausgebildet. Vorteilhaft kann der Vorratsbehälter im Auslass ein im ungekuppelten Zustand des Vorratsbehälters geschlossenes Ventilelement aufweisen, um eine Auslaufen des Vorratsbehälters vor dem Einsetzen in oder nach dem Herausnehmen aus der Aufnahme sicher zu verhindern. Bevorzugt kann das Kupplungsgegenstück des Vorratsbehälters eine ringförmige Nut zum formschlüssigen Eingriff durch ein Schieberelement der Kupplung der Aufnahme aufweisen.

Bevorzugt ist der Vorratsbehälter mit einem flüssigen oder viskosen Zusatzstoff, insbesondere Waschshampoo, Schaumbildner, Wachs, Trocknungshilfsmittel, Seife, Felgenreiniger und/oder Insektenentferner, befüllt.

Weitere Besonderheiten und Vorzüge der Erfindung ergeben sich aus der folgenden Beschreibung bevorzugter Ausführungsbeispiele anhand der Zeichnungen. Es zeigen:
- **Fig. 1**: eine Darstellung der erfindungsgemäßen Aufnahme mit einem darin eingesetzten erfindungsgemäßen Vorratsbehälter;
- **Fig. 2**: eine Schnittdarstellung einer als Schnappkupplung ausgebildeten Kupplung der Aufnahme und eines Kupplungsgegenstücks des Vorratsbehälters im ungekuppelten Zustand;
- **Fig. 3**: die Darstellung aus Fig. 2 bei gekuppelter Schnappkupplung und Kupplungsgegenstück;
- **Fig. 4**: eine Schnittdarstellung der Schnappkupplung und des Kupplungsgegenstücks beim Entkuppeln mittels eines Drehstabs;
- **Fig. 5**: eine Vorderansicht einer erfindungsgemäßen Anordnung von mehreren erfindungsgemäßen Aufnahmen mit darin angeordneten erfindungsgemäßen Vorratsbehältern;
- **Fig. 6**: eine schematische Darstellung eines alternativen Betätigungselements in Form einer Schubstange mit einem Teil der Schnappkupplung.

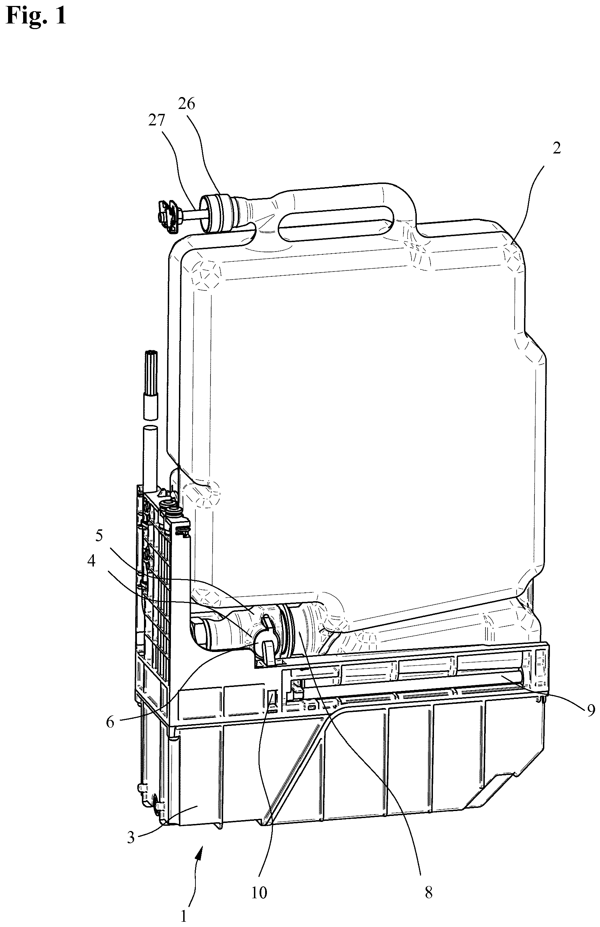

In Fig. 1 ist die erfindungsgemäße Aufnahme 1 zusammen mit einem darin eingesetzten erfindungsgemäßen Vorratsbehälter 2 gezeigt. Die Aufnahme 1 weist einen Grundkörper 3 auf, an dem eine als Schnappkupplung 4 ausgebildete Kupplung an einem Einlass 5 angeordnet ist. Die Schnappkupplung 4 enthält ein Schieberelement 6, welches der lösbaren Halterung eines Kupplungsgegenstücks 7 an einem Auslass 8 des Vorratsbehälters 2 dient. Zur Betätigung der Schnappkupplung 4 ist ein Drehstab 9 vorgesehen, welcher an einem Ende einen Hebel 10 aufweist, der gleitend an einer Kontaktfläche 6' des Schieberelements 6 anliegt.

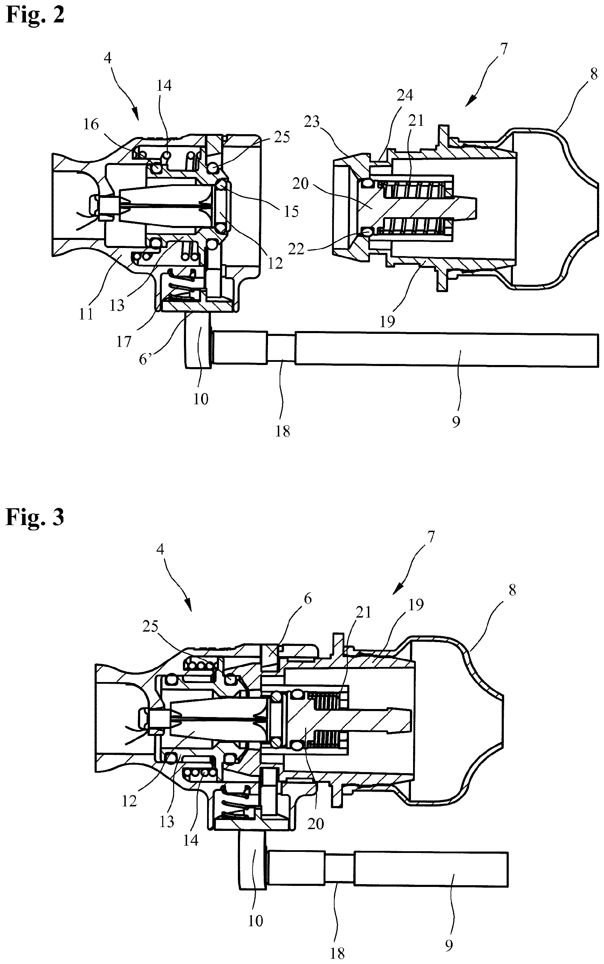

Fig. 2 zeigt eine Detailansicht der Schnappkupplung 4 der Aufnahme 1 mit dem Kupplungsgegenstück 7 des Vorratsbehälters 2 in ungekuppelten Zustand in der Draufsicht. Die Schnappkupplung 4 besitzt ein äußeres Gehäuse 11 und einen mit diesem fest verbundenen inneren Einsatz 12. Zwischen dem inneren Einsatz 12 und dem äußeren Gehäuse 11 ist ein verschiebbares erstes Ventilelement 13 angeordnet, welches mittels einer ersten Druckfeder 14 in einer Schließstellung gehalten wird. In der Schließstellung dichtet ein erster Dichtungsring 15 den inneren Einsatz 12 gegenüber dem verschiebbaren ersten Ventilelement 13 ab. Ein zweiter Dichtungsring 16 dichtet zudem das verschiebbare erste Ventilelement 13 sowohl in der Schließstellung als auch bei einer Verschiebung in eine Öffnungsstellung gegenüber dem äußeren Gehäuse 11 ab.

Des Weiteren ist in der Schnappkupplung 4 ein Schieberelement 6 beweglich gelagert und mittels einer zweiten Druckfeder 17 in eine Richtung vorgespannt. Als Betätigungsvorrichtung des Schieberelements 6 ist ein Hebel 10 vorgesehen, welcher an einer äußeren Kontaktfläche 6' des Schieberelements 6 gleitend anliegt und an einem als Drehstab 9 ausgebildeten Betätigungselement drehfest befestigt ist. Der Drehstab 9 weist an seinem dem Hebel 10 gegenüberliegenden Ende eine hier nicht dargestellte Schlüsselfläche auf, welche zum Eingriff eines Werkzeugs zur Drehung des Drehstabs 9 ausgelegt ist. Zur Betätigung des Drehstabs sind aber auch weitere Hebelelemente, Räder oder dergleichen denkbar.

Des Weiteren ist an dem Drehstab 9 auch eine ringförmige Nut 18 angeordnet, in welche Clipselemente an dem Grundkörper 3 der Aufnahme 1 eingreifen und so den Drehstab 9 drehbar halten. Hierdurch werden Positioniermittel zum Festlegen der Position des Drehstabs 9 in Längsrichtung der Aufnahme 1 bereitgestellt.

Das ebenfalls dargestellte Kupplungsgegenstück 7 weist ein äußeres Gehäuse 19 und ein in dem Gehäuse 19 beweglich angeordnetes zweites Ventilelement 20 auf. Das zweite Ventilelement 20 wird durch eine dritte Druckfeder 21 gegen das äußere Gehäuse 19 gepresst, wobei zwischen dem zweiten Ventilelement 20 und dem äußeren Gehäuse 19 zur Abdichtung ein zweiter Dichtungsring 22 angeordnet ist. An der Außenseite des äußeren Gehäuses 19 sind zudem eine schräge Einschubfläche 23 und eine Ringnut 24 angeordnet.

Bei einer Kupplung kommt das Kupplungsgegenstück 7 über die schräge Einschubfläche 23 mit dem Schieberelement 6 in Kontakt und verschiebt dieses entgegen der Kraft der zweiten Druckfeder 17. In der Schließstellung der Kupplung greift das Schieberelement federbetätigt in die Ringnut 24 des Kupplungsgegenstücks 7 ein und hält somit die beiden Kupplungsteile zusammen.

Der gekuppelte Zustand ist in Fig. 3 gezeigt. Das äußere Gehäuse 19 des Kupplungsgegenstücks kommt dabei zur Anlage an dem ersten Ventilelement 13 der Schnappkupplung 4 und verschiebt dieses entgegen der ersten Druckfeder 14 in eine Öffnungsstellung. Zur Abdichtung zwischen dem äußeren Gehäuse 19 und dem ersten Ventilelement 13 ist ein dritter Dichtungsring 25 vorgesehen. Bei der Kupplung kommt zudem der feste innere Einsatz 12 zur Anlage an dem beweglichen zweiten Ventilelement 20 und verschiebt dies entgegen der dritten Druckfeder 21 ebenfalls in eine Öffnungsstellung. Durch diese Öffnungsstellung beider Ventilelemente 13; 20 wird ein Durchfluss von Medien jeglicher Art ermöglicht.

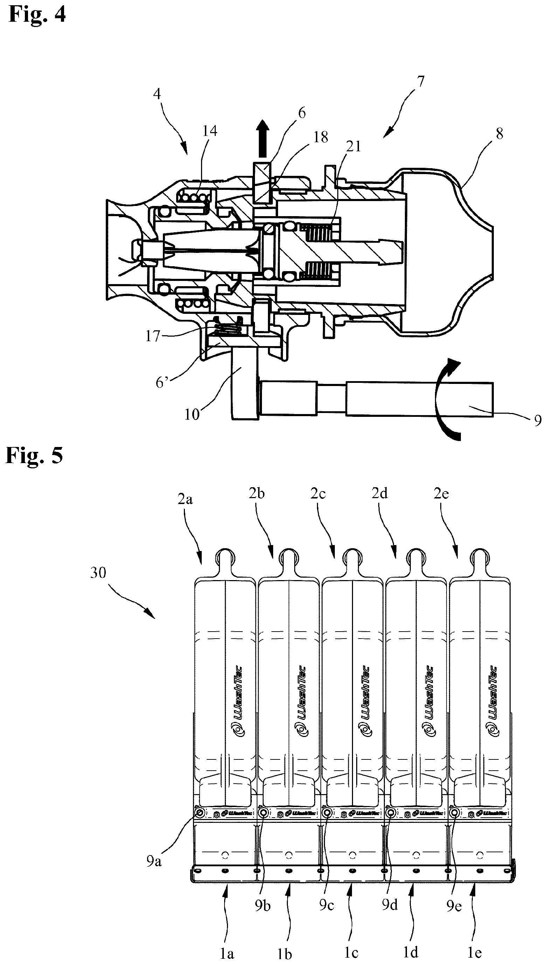

In Fig. 4 ist das Lösen der Kupplung gezeigt. Durch ein Verdrehen des Drehstabs 9 wird der Hebel 10 gegen die Kontaktfläche 6' des Schieberelements 6 gedrückt und verschiebt dieses entgegen der zweiten Druckfeder 17. Dadurch wird das Schieberelement 6 aus dem haltenden Eingriff in der Ringnut 24 wegbewegt und das Kupplungsgegenstück 7 damit freigegeben. Die Trennung der beiden Kupplungsteile, Schnappkupplung 4 und Kupplungsgegenstück 7, wird durch die Vorspannung der beiden Druckfedern 14; 21 unterstützt.

In Fig. 5 ist eine Anordnung 30 von mehreren oben beschriebenen erfindungsgemäßen Aufnahmen 1a bis 1e mit eingesetzten Vorratsbehältern 2a bis 2e in der Vorderansicht dargestellt. Zum Herausnehmen eines Vorratsbehälters muss nur der jeweilige Drehstab 9a bis 9e welcher in Einschubrichtung der Schnappkupplung angeordnet und von der Stirnseite dieser Anordnung 30 zugänglich ist, betätigt werden. Dies kann beispielsweise über an jedem Drehstab 9a bis 9e angeordnete Schlüsselflächen mittels eines Werkzeugs erfolgen. Anschließend kann der betreffende Vorratsbehälter aus der Anordnung 30 herausgezogen werden. Die Verwendung eines Drehstabs und die Durchführung dessen an die vordere Stirnseite ermöglichen somit ein einfaches und schnelles Wechseln der Kartuschen und damit einen rationalen Arbeitsablauf.

Um den Abfluss des im Vorratsbehälter 2 bevorrateten Zusatzmittels zu erleichtern, kann vorteilhaft am Vorratsbehälter 2 eine Belüftungsvorrichtung 26 vorgesehen werden, welche über einen an der Aufnahme 1 angebrachten Belüftungsstempel 27 geöffnet werden kann. Hierdurch kann ein beim Abfluss des Zusatzmittels aus dem Vorratsbehälter 2 entstehender zunehmender Unterdruck im Vorratsbehälter 2 verhindert werden.

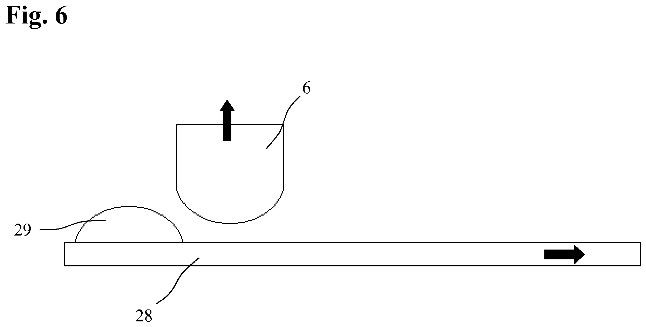

Die Betätigung der Schnappkupplung kann jedoch auch über eine Schubstange 28 mit einem an dieser angeordneten Nocken 29 erfolgen, wie dies in Fig. 6 schematisch dargestellt ist. Wird beispielsweise die Schubstange 28 mit dem Nocken 29 in Pfeilrichtung horizontal bewegt, so kommt der Nocken 29 in Kontakt mit dem Schieberelement 6 in Kontakt und drückt diese in Pfeilrichtung nach oben. Die Kontur des Nockens 29 und des Schieberelements 6 sind dabei nicht auf die in Fig. 6 gezeigte Ausführungsform beschränkt. So sind beispielsweise auch eckige, rampenförmige Konturen oder dergleichen denkbar.

Anstelle der Schnappkupplung 4 können vorteilhaft auch andere geeignete, manuell betätigbare, bevorzugt selbsttätig verriegelnde, Kupplungen verwendet werden. Beispielsweise kann das Schieberelement 6 auch drehgelenkig an dem Hebel 10 angelenkt sein, so dass über eine Drehung des Drehstabs 9 das Schieberelement 6 auch zwischen seiner geöffneten und seiner geschlossenen Stellung hin- und herbewegt werden kann.

### Bezugszeichenliste

- 1: Aufnahme
- 2: Vorratsbehälter
- 3: Grundkörper
- 4: Schnappkupplung
- 5: Einlass
- 6: Schieberelement
- 6': Kontaktfläche an Schieberelement
- 7: Kupplungsgegenstück
- 8: Auslass
- 9: Drehstab
- 10: Hebel
- 11: Äußeres Gehäuse der Kupplung
- 12: Innerer Einsatz
- 13: Erstes Ventilelement
- 14: Erste Druckfeder
- 15: Erster Dichtungsring
- 16: Zweiter Dichtungsring
- 17: Zweite Druckfeder
- 18: Ringförmige Nut
- 19: Äußeres Gehäuse des Kupplungsgegenstücks
- 20: Zweites Ventilelement
- 21: Dritte Druckfeder
- 22: Zweiter Dichtungsring
- 23: Schräge Einschubfläche
- 24: Ringnut
- 25: Dritter Dichtungsring
- 26: Belüftungsvorrichtung
- 27: Belüftungsstempel
- 28: Schubstange
- 29: Nocken
- 30: Anordnung von mehreren Aufnahmen

## Patentansprüche

1. Aufnahme (1) für einen Vorratsbehälter (2) von Zusatzstoffen in einer Fahrzeugbehandlungsanlage zum selbsttätigen Halten des Vorratsbehälters (2) nach dem Einsetzen des Vorratsbehälters (2) in die Aufnahme (1), mit einem Einlass (5) zur Weiterleitung der Zusatzstoffe an eine Dosiervorrichtung, einer an dem Einlass (5) angeordneten Kupplung (4) zum lösbaren Verriegeln mit einem an einem Auslass (8) des Behälters (2) angeordneten Kupplungsgegenstück (7), **dadurch gekennzeichnet**
**dass** an der Aufnahme (1) ein Betätigungselement (9; 28) zur Betätigung der Kupplung (4) angeordnet ist,
**dass** in der Kupplung (4) ein Ventilelement (13) vorgesehen ist, das im ungekuppelten Zustand geschlossen ist und
**dass** das Betätigungselement (9; 28) längs der Einschubrichtung des Vorratsbehälters (2) in der Aufnahme (1) angeordnet ist.

2. Aufnahme nach Anspruch 1, **dadurch gekennzeichnet, dass** das Betätigungselement (9; 28) an einem ersten Ende an eine vordere Stirnseite der Aufnahme (1) geführt ist und an einem zweiten Ende eine Betätigungsvorrichtung (10; 29) zur Betätigung der Kupplung (4) angeordnet ist.

3. Aufnahme nach Anspruch 2, **dadurch gekennzeichnet, dass** die Kupplung (4) ein zum formschlüssigen Eingriff in eine ringförmige Nut (18) an dem Kupplungsgegenstück (7) des Vorratsbehälters (2) ausgebildetes Schieberelement (6) aufweist.

4. Aufnahme nach Anspruch 3, **dadurch gekennzeichnet, dass** das Schieberelement (6) eine Kontaktfläche (6') für die Betätigungsvorrichtung (10; 29) aufweist.

5. Aufnahme nach Anspruch 4, **dadurch gekennzeichnet, dass** die Betätigungsvorrichtung (10; 29) zur gleitenden Anlage an der Kontaktfläche (6') ausgebildet ist.

6. Aufnahme nach einem der Ansprüche 2 bis 5, **dadurch gekennzeichnet, dass** das Betätigungselement als Drehstab (9) und die Betätigungsvorrichtung als Hebel (10) zum Öffnen der Kupplung (4) ausgebildet sind.

7. Aufnahme nach Anspruch 6, **dadurch gekennzeichnet, dass** die Kupplung (4) durch eine Drehung des Drehstabs (9) mittels des Hebels (10) lösbar ist.

8. Aufnahme nach einem der Ansprüche 6 oder 7, **dadurch gekennzeichnet, dass** an der Aufnahme (1) und dem Drehstab (9) Positioniermittel zur Festlegung der Position des Drehstabs (9) in seiner Längsrichtung bezüglich der Aufnahme (1) vorgesehen sind.

9. Anordnung (30) von mindestens zwei Aufnahmen nach einem der Ansprüche 1 bis 8, **dadurch gekennzeichnet, dass** die Aufnahmen (1) unmittelbar nebeneinander und/oder übereinander angeordnet sind und das Betätigungselement (9) mindestens einer der Aufnahmen (1) von der Stirnseite der Aufnahme (1) betätigbar ist.

10. Anordnung nach Anspruch 9, **dadurch gekennzeichnet, dass** die Betätigungselemente (9) aller Aufnahmen (1) von den Stirnseiten der Aufnahmen (1) betätigbar sind.

11. Fahrzeugbehandlungsanlage mit mindestens einer Aufnahme nach einem der Ansprüche 1 bis 8, insbesondere in einer Anordnung (30) nach einem der Ansprüche 9 oder 10.

12. Aufnahme (1) mit einem Vorratsbehälter (2) für Zusatzstoffe einer Fahrzeugbehandlungsanlage, mit einem Auslass (8) für die Zusatzstoffe und einem Kupplungsgegenstück (7), das mit einer an einem Einlass (5) der Aufnahme (1) nach einem der Ansprüche 1 bis 8 einer Dosiervorrichtung der Fahrzeugbehandlungsanlage vorgesehenen Kupplung (4) lösbar gekuppelt ist, wobei das Kupplungsgegenstück (7) eine schräge Einschubfläche (23) und eine ringförmige Nut (18) zum formschlüssigen Eingriff durch ein Schieberelement (6) der Kupplung (4) aufweist.

13. Aufnahme (1) nach Anspruch 12, **dadurch gekennzeichnet, dass** im Auslass (8) ein im ungekuppelten Zustand des Vorratsbehälters (2) geschlossenes Ventilelement (20) vorgesehen ist.

## Claims

1. Holder (1) for a supply container (2) of additives in a vehicle treatment installation for automatically holding the supply container (2) after the supply container (2) has been inserted into the holder (1), having an inlet (5) for transferring the additives to a metering device, and having a coupling (4) arranged on the inlet (5) and intended for releasable locking with a coupling mating piece (7) arranged on an outlet (8) of the container (2), **characterized in that** an actuating element (9; 28) for actuating the coupling (4) is arranged on the holder (1), **in that** a valve element (13), which is closed in the uncoupled state, is provided in the coupling (4), and **in that** the actuating element (9; 28) is arranged along the direction of insertion of the supply container (2) in the holder (1).

2. Holder according to Claim 1, **characterized in that** the actuating element (9; 28) is guided at a first end to a front end face of the holder (1), and an actuating device (10; 29) for actuating the coupling (4) is arranged at a second end.

3. Holder according to Claim 2, **characterized in that** the coupling (4) has a slide element (6) which is designed for positively engaging in an annular groove (18) on the coupling mating piece (7) of the supply container (2).

4. Holder according to Claim 3, **characterized in that** the slide element (6) has a contact face (6') for the actuating device (10; 29).

5. Holder according to Claim 4, **characterized in that** the actuating device (10; 29) is designed to bear in a sliding manner against the contact face (6').

6. Holder according to one of Claims 2 to 5, **characterized in that** the actuating element is designed as a rotary bar (9), and the actuating device is designed as a lever (10) for opening the coupling (4).

7. Holder according to Claim 6, **characterized in that** the coupling (4) can be released by means of the lever (10) by rotating the rotary bar (9).

8. Holder according to either of Claims 6 and 7, **characterized in that** positioning means are provided on the holder (1) and the rotary bar (9) for fixing the position of the rotary bar (9) in its longitudinal direction with respect to the holder (1).

9. Arrangement (30) of at least two holders according to one of Claims 1 to 8, **characterized in that** the holders (1) are arranged directly next to one another and/or above one another, and the actuating element (9) of at least one of the holders (1) can be actuated from the end face of the holder (1).

10. Arrangement according to Claim 9, **characterized in that** the actuating elements (9) of all the holders (1) can be actuated from the end faces of the holders (1).

11. Vehicle treatment installation having at least one holder according to one of Claims 1 to 8, in particular in an arrangement (30) according to either of Claims 9 and 10.

12. Holder (1) having a supply container (2) for additives of a vehicle treatment installation, having an outlet (8) for the additives and a coupling mating piece (7) which is coupled in a releasable manner with a coupling (4) provided on an inlet (5) of the holder (1) according to one of Claims 1 to 8 of a metering device of the vehicle treatment installation, wherein the coupling mating piece (7) has an inclined insertion face (23) and an annular groove (18) for positive engagement by a slide element (6) of the coupling (4) .

13. Holder (1) according to Claim 12, **characterized in that** a valve element (20), which is closed in the uncoupled state of the supply container (2), is provided in the outlet (8).

## Revendications

1. Logement (1) pour un réservoir de stockage (2) de substances d'addition dans une installation de traitement pour véhicule pour le maintien automatique du réservoir de stockage (2) après l'insertion du réservoir de stockage (2) dans le logement (1), avec une entrée (5) pour la transmission des substances d'addition à un dispositif de dosage, avec un couplage (4) disposé sur l'entrée (5) pour le verrouillage séparable avec une contre-pièce de couplage (7) disposée sur une sortie (8) du réservoir (2), **caractérisé en ce qu'**un élément d'actionnement (9; 28) est disposé sur le logement (1) pour l'actionnement du couplage (4), **en ce qu'**il est prévu dans le couplage (4) un élément de soupape (13), qui dans l'état non couplé est fermé et **en ce que** l'élément d'actionnement (9; 28) est disposé le long de la direction d'insertion du réservoir de stockage (2) dans le logement (1).

2. Logement selon la revendication 1, **caractérisé en ce que** l'élément d'actionnement (9; 28) est guidé à une première extrémité sur un côté frontal avant du logement (1) et un dispositif d'actionnement (10; 29) est disposé à la deuxième extrémité pour l'actionnement du couplage (4).

3. Logement selon la revendication 2, **caractérisé en ce que** le couplage (4) présente un élément de coulisseau (6) configuré pour s'engager par emboîtement dans une rainure annulaire (18) sur la contre-pièce de couplage (7) du réservoir de stockage (2).

4. Logement selon la revendication 3, **caractérisé en ce que** l'élément de coulisseau (6) présente une face de contact (6') pour un dispositif d'actionnement (10; 29) .

5. Logement selon la revendication 4, **caractérisé en ce que** le dispositif d'actionnement (10; 29) est configuré pour un appui glissant sur la face de contact (6').

6. Logement selon l'une quelconque des revendications 2 à 5, **caractérisé en ce que** l'élément d'actionnement est formé par une barre de torsion (9) et le dispositif d'actionnement est formé par un levier (10) pour ouvrir le couplage (4).

7. Logement selon la revendication 6, **caractérisé en ce que** le couplage (4) peut être libéré par une rotation de la barre de torsion (9) au moyen du levier (10) .

8. Logement selon une des revendications 6 ou 7, **caractérisé en ce qu'**il est prévu sur le logement (1) et la barre de torsion (9) des moyens de positionnement pour la fixation de la position de la barre de torsion (9) dans sa direction longitudinale par rapport au logement (1).

9. Agencement (30) d'au moins deux logements selon l'une quelconque des revendications 1 à 8, **caractérisé en ce que** les logements (1) sont disposés directement l'un à côté de l'autre et/ou l'un au-dessus de l'autre et l'élément d'actionnement (9) d'au moins un des logements (1) peut être actionné par le côté frontal du logement (1).

10. Agencement selon la revendication 9, **caractérisé en ce que** les éléments d'actionnement (9) de tous les logements (1) peuvent être actionnés par les côtés frontaux des logements (1).

11. Installation de traitement pour véhicule avec au moins un logement selon l'une quelconque des revendications 1 à 8, en particulier dans un agencement (30) selon une des revendications 9 ou 10.

12. Logement (1) avec un réservoir de stockage (2) pour des substances d'addition d'une installation de traitement pour véhicule, avec une sortie (8) pour les substances d'addition et une contre-pièce de couplage (7), qui est couplée de façon séparable avec un couplage (4) prévu à une entrée (5) du logement (1) selon l'une quelconque des revendications 1 à 8 d'un dispositif de dosage de l'installation de traitement pour véhicule, dans lequel la contre-pièce de couplage (7) présente une face d'insertion oblique (23) et une rainure annulaire (18) pour l'engagement par emboîtement par un élément de coulisseau (6) du couplage (4).

13. Logement (1) selon la revendication 12, **caractérisé en ce qu'**il est prévu dans la sortie (8) un élément de soupape (20) fermé dans l'état non couplé du réservoir de stockage (2).
